# EUROPÄISCHE PATENTSCHRIFT

(11) **EP 1 879 276 B1**
(45) Veröffentlichungstag und Bekanntmachung des Hinweises auf die Patenterteilung: **12.12.2012**
(21) Anmeldenummer: 07112295.6
(22) Anmeldetag: 11.07.2007
(51) Int. Cl.: H02G 3/08, H02G 3/14

(54) **Abdeckung aus Beton für Installationsmaterial**
Concrete cover for installation material
Revêtement en béton pour matériau d'installation

(30) Priorität: 11.07.2006 DE 102006032285; 04.07.2007 DE 102007031085
(43) Veröffentlichungstag der Anmeldung: 16.01.2008
(73) Patentinhaber: Mewes, Jessica, 22297 Hamburg (DE)
(72) Erfinder: Mewes, Jessica, 22297 Hamburg (DE)
(74) Vertreter: Liedtke, Klaus

(56) Entgegenhaltungen:
- DE-A1- 3 129 061
- DE-A1- 10 112 701
- DE-A1- 10 307 473
- DE-A1- 19 647 397
- FR-A- 2 711 984
- GB-A- 225 596
- GB-A- 229 904
- GB-A- 1 445 565
- JP-A- 60 166 249
- US-A- 5 114 365

## Beschreibung

Die Erfindung betrifft Abdeckungen für Installationen, insbesondere für elektrische Installationen, wie Schalter, Steckdosen und dergleichen.

Das Dokument US-A-5 114 365 beschreibt Abdeckungen für Installationsgeräte, die üblicherweise aus Kunststoff gegossen werden und erwähnt als Alternative die Möglichkeit bei Design-Abdeckungen andere Materialien zu verwenden, wie z. B. Holz oder Keramik.

Der Erfindung liegt die Aufgabe zugrunde, eine Abdeckung der eingangs genannten Art anzugeben, mit der eine ästhetisch ansprechende Ausführung kostengünstig hergestellt werden kann.

Erfindungsgemäß wird die Aufgabe mit einer Abdeckung, welche die in Anspruch 1 angegebenen Merkmale enthält, gelöst.

Die Erfindung kann für verschiedene Anwendungen eingesetzt werden. Vorzugsweise wird Sie angewendet für elektrische Installationen in Betonwänden, Hohlraumwänden oder Vertäfelungen. Sie kann verwendet werden für Abdeckungen von Steckdosen in einfacher oder mehrfacher Ausführungen für beliebige Normen, sowie für Antennen- und Telefonsteckdosen. Ferner können Lichtschalter (Kipp-, Wipp-, Dreh-, Tastschalter und dergleichen) einzeln oder in Kombinationen damit ausgerüstet werden. Außerdem kann die Erfindung für Gebäudesicherungssysteme verwendet werden. Die Herstellung kann durch Betongießverfahren oder auch durch Vakuumbetongießen erfolgen.

Vorteilhafte Ausgestaltungen sind in den Unteransprüchen angegeben.

Die erfindungsgemäße Anordnung bietet die Möglichkeit, die Abdeckelemente in Betonwände fluchtend einzuarbeiten. Die Bauelemente zeichnen sich durch eine hohe Festigkeit aus, wobei die Druckfestigkeit durch das Betonmaterial und die Zugfestigkeit durch eine Bewehrung gewährleistet wird.

Zur Bewehrung können Glasfasern oder Kunststofffasern verwendet werden. Die Oberflächen können in guter Qualität glatt, matt, strukturiert in verschiedenen Farbvarianten oder auch marmoriert hergestellt werden. Um die Dauerfestigkeit zu gewährleisten, werden Versiegelungen oder Schutzschichten aufgetragen.

Ein besonderer Vorteil ist die hohe Brandsicherheit.

Die Erfindung wird im Folgenden an Ausführungsbeispielen näher erläutert. Die zugehörigen Zeichnungen zeigen:
- Figuren 1 bis 3: eine Steckdosenabdeckung in drei Ansichten,
- Figuren 4 und 5: Ausgestaltungsformen von mit Steckdosen kombinierten Schaltmodulen für Lichtschalter,
- Figuren 6 und 7: Ausführungen mit senkrecht angeordneten Schaltflächen,
- Figuren 8 und 9: Ausführungen mit waagrecht angeordneten Schaltflächen,
- Figur 10: eine Ausführungsform, bei der zwei senkrecht angeordnete Schalflächen mit einer Steckdose kombiniert sind, und
- Figur 11: einen Schalter mit Bedienoberfläche aus leiterplatinenbeschichtetem Glas.

Für die Herstellung des Erzeugnisses sind folgende Rezepturen geeignet:
1. Betonrezeptur (1-Liter-Mischung)

| | Masse | Rohdichte | Volumen |
|---|---|---|---|
| DuraSpezial (DRS) | 889 g | 3,0 | 296 ml |
| destilliertes Wasser | 267 g | 1,2 | 267 ml |
| 0/1 Prießnitzer Sand | 1093 g | 2,62 | 417 ml |
| Luftporen (LP) | 2 % | - | 20 ml |

2. Betonrezeptur mit Glasfaserzugabe (1-Liter-Mischung)

| | Masse | Rohdichte | Volumen |
|---|---|---|---|
| DuraSpezial (DRS) | 889 g | 3,0 | 296 ml |
| destilliertes Wasser | 285 g | 1,0 | 285 ml |
| 0/1 Prießnitzer Sand | 1017 g | 2,62 | 388 ml |
| Glasfaser (1-2 mm) | 12,45 g | - | - |
| Luftporen (LP) | 2 % | - | 20 ml |

3. Betonrezeptur mit Glasfaser- und Pigmentzugabe (1-Liter-Mischung)

| | Masse | Rohdichte | Volumen |
|---|---|---|---|
| DuraSpezial (DRS) | 889 g | 3,0 | 296 ml |
| destilliertes Wasser | 285 g | 1,0 | 285 ml |
| 0/1 Prießnitzer Sand | 1017 g | 2,62 | 388 ml |
| Glasfaser (1-2 mm) | 12,45 g | - | - |
| Pigment und/oder Mehlkorn | 26,67 | - | - |
| Luftporen (LP) | 2 % | - | 20 ml |

Das Verfahren zur Herstellung der Betonteile verläuft so, dass zunächst Sand mit Zement trocken vermischt wird, danach Wasser zugegeben und die Mischung erneut durchgemischt wird, wobei in der letzten Phase des Feuchtmischens ein Bewehrungsmaterial (beispielsweise Glasfaser oder Kunststofffaser) zugegeben wird. Vorteilhafterweise werden dabei Glasfasern mit unterschiedlichen Abmessungen verwendet. Die Abdeckelemente können durch Betongießverfahren oder auch durch Vakuumbetongießen geformt werden.

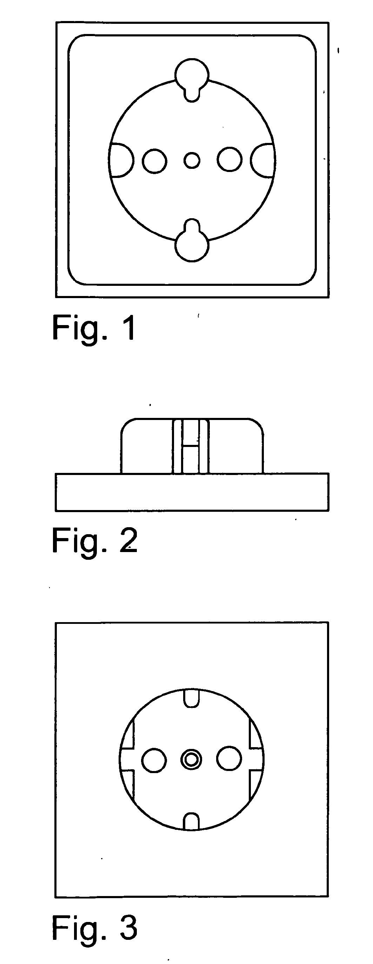

In den Figuren 1 bis 3 ist eine Steckdosenabdeckung aus Beton in drei Ansichten dargestellt. Die Steckdosenabdeckung ist in die Wand eingelassen, so dass ihre Oberfläche eine Flucht mit der Wand bildet, in der sich lediglich die funktionsbedingten Vertiefungen befinden. Die Abdeckung "verschmilzt" damit optisch und haptisch nahezu mit der Wand. Der technische Aufbau und die Stromführung im Inneren entsprechen der herkömmlichen Bauweise.

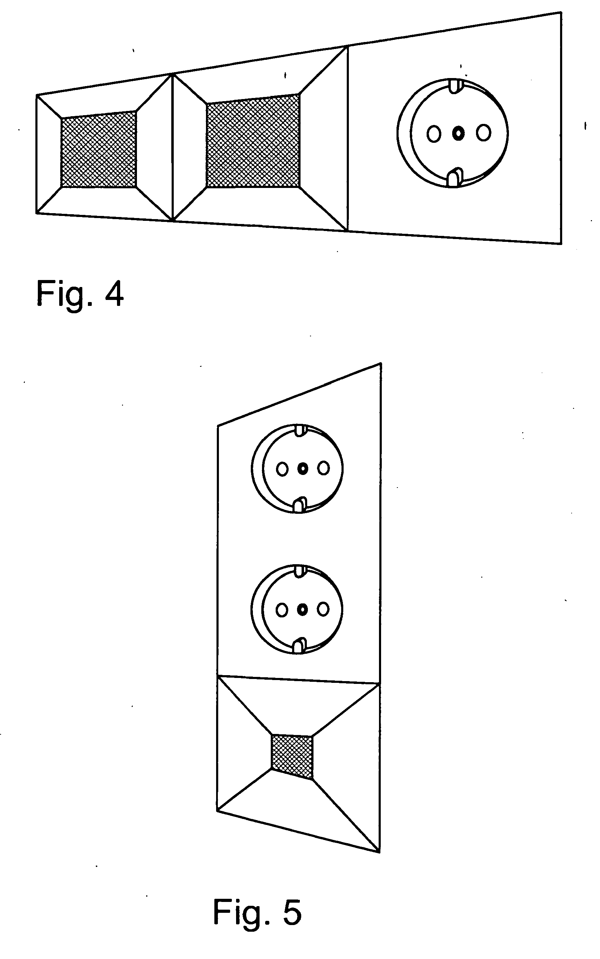

Die Figuren 4 und 5 zeigen Ausgestaltungsformen von zwei Schaltmodulen, die miteinander und mit einer Steckdose kombiniert sind. Derartige Schaltmodule können für Lichtschalter, Jalousieregler etc. verwendet werden. Bei der in diesen Figuren dargestellten Anordnungen beträgt die Größe eines einzelnen Elements 80 mm x 80 mm und entspricht damit etwa der Größe eines herkömmlichen Lichtschalters oder einer herkömmlichen Steckdose. Das Tasten-Bedienfeld kann unterschiedlich groß sein. Die Bedienung der Schaltmodule erfolgt hierbei durch leichtes Antippen, Berühren oder Darüberstreichen. Der Aufbau entspricht den zu den Figuren 1 bis 3 ausgeführten Erläuterungen.

Wegen seiner Stromleitfähigkeit und seinen guten Verarbeitungseigenschaften bietet sich Aluminium als geeignetes Material für die leitende Schicht an den Bedienoberflächen an, wobei diese mechanisch oder chemisch aufgebracht werden kann. Mit Hilfe unterschiedlicher Eloxierschichten können unterschiedliche Farben und Oberflächen (matt, glänzend, gebürstet, gemustert usw.) erzielt werden. Auch der Beton kann in unterschiedlichen Färbungen und Strukturmustern ausgeführt werden.

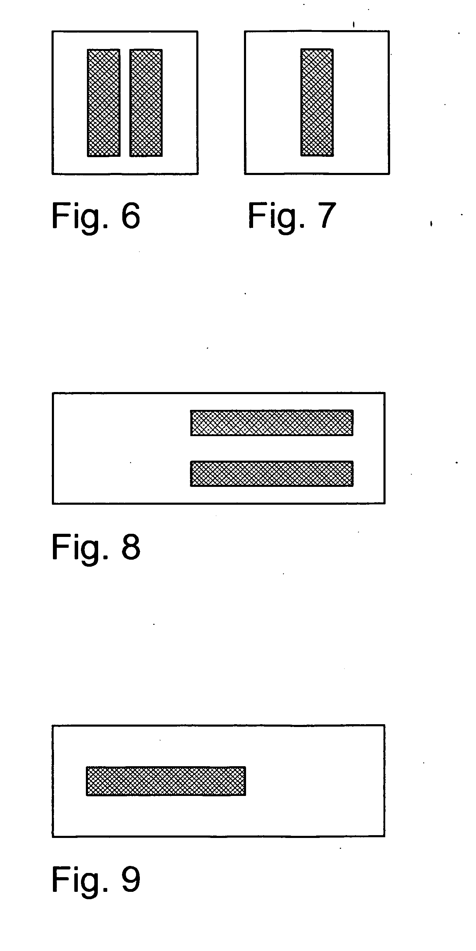

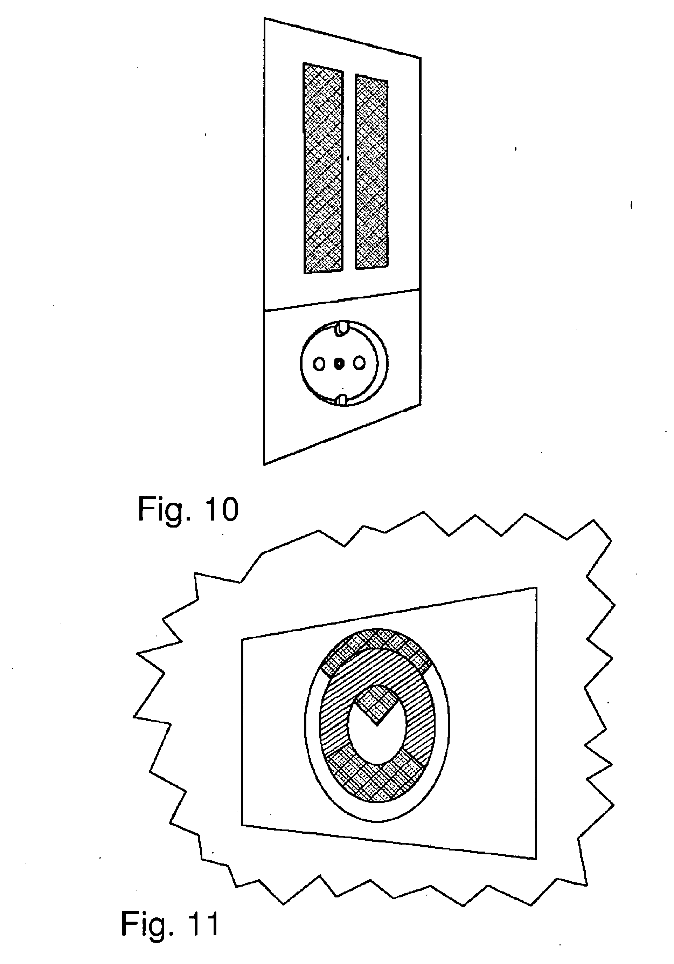

In den Figuren 6 bis 10 sind Ausführungsmöglichkeiten für Bedienfelder dargestellt. Es handelt sich dabei um Schalter, die entweder mehrere (vorzugsweise bis zu drei) Schaltflächen unterschiedlicher Funktionen beinhalten nach dem Prinzip des Schiebereglers, eine abgestufte Schaltfläche einer Funktion (z. B. der Dimmerfunktion bei Leuchten) beinhalten. Die hier gezeigten Bedienfelder erscheinen dem Auge homogen, können jedoch verschiedene Schaltmodule ansteuern. Beispielsweise sind mit dem in Figur 6 gezeigten Schalter bis zu vier Schaltmodule ansteuerbar. In Figur 10 ist ein Schalter dargestellt, der mit einer Steckdose kombiniert ist.

Die in Figur 11 gezeigte Anordnung enthält einen Schalter, bei dem die Bedienoberfläche aus leiterplatinenbeschichtetem Glas in schlagsicherer Ausführung besteht. Auch hierbei ergeben sich viele Möglichkeiten der Farb- und Oberflächengestaltung.

## Patentansprüche

1. Abdeckung für elektrische Installationen, **dadurch gekennzeichnet, dass** die Abdeckung aus Beton gefertigt ist, der mit einer Bewehrung versehen ist, wobei die im Beton enthaltene Gesteinskörnung kleiner als 4 mm ist und natürlicher oder künstlicher Sand verwendet wird und wobei die elektrischen Installationen Schalter oder Steckdosen sind.

2. Abdeckung nach Anspruch 1, **dadurch gekennzeichnet, dass** als Beton ein selbstverdichtender Beton verwendet wird.

3. Abdeckung nach einem der Ansprüche 1 oder 2, **dadurch gekennzeichnet, dass** der Betonmischung Feinstaubpartikel oder Pigmente zugegeben werden.

4. Abdeckung nach einem der vorhergehenden Ansprüche, **dadurch gekennzeichnet, dass** der Beton mit den folgenden Massenverhältnissen gemischt ist:
• ca. 884 bis 894 g DuraSpezial (DRS)
• ca. 262 bis 272 g H₂O
• ca. 1.089 bis 1.099 g 0/1 Sand
• ca. 1 bis 3 % Luftporen,
wobei sich die Bestandteile zu 100 % ergänzen.

5. Abdeckung nach einem der Ansprüche 1 bis 3, **dadurch gekennzeichnet, dass** der Beton mit den folgenden Massenverhältnissen gemischt ist:
• ca. 884 bis 894 g DuraSpezial (DRS)
• ca. 280 bis 290 g H₂O
• ca. 1.012 bis 1.022 g 0/1 Sand
• ca. 12, 40 bis 12,50 g Glasfaser (1 bis 2 mm)
• ca. 1 bis 3 % Luftporen,
wobei sich die Bestandteile zu 100 % ergänzen.

6. Abdeckung nach einem der Ansprüche 1 bis 3, **dadurch gekennzeichnet dass** der Beton mit den folgenden Massenverhältnissen gemischt ist:
• ca. 884 bis 894 g DuraSpezial (DRS)
• ca. 280 bis 290 g H₂O
• ca. 1.012 bis 1.022 g 0/1 Sand
• ca. 12, 40 bis 12,50 g Glasfaser (1 bis 2 mm)
• Pigment und/oder Mehlkorn
• ca. 1 bis 3 % Luftporen,
wobei sich die Bestandteile zu 100 % ergänzen.

7. Abdeckung nach einem der vorhergehenden Ansprüche, **dadurch gekennzeichnet, dass** die Oberflächenschicht der Bedienelemente aus Aluminium hergestellt ist.

8. Abdeckung nach einem der Ansprüche 1 bis 6, **dadurch gekennzeichnet, dass** die Oberflächenschicht der Bedienelemente aus leiterplatinenbeschichtetem Glas hergestellt ist.

9. Abdeckung nach einem der vorhergehenden Ansprüche, **dadurch gekennzeichnet, dass** die Schaltmodule durch leichtes Antippen, Berühren oder Streicheln der Aluminiumschicht angesteuert werden.

10. Abdeckung nach einem der vorhergehenden Ansprüche, **dadurch gekennzeichnet, dass** die Schaltmodule mittels berührungsloser Sensoren betätigt werden.

11. Abdeckung nach einem der vorhergehenden Ansprüche, **dadurch gekennzeichnet, dass** der Schalter mehrere Schaltflächen unterschiedlicher Funktionen oder eine abgestufte Schaltfläche einer Funktion beinhaltet.

## Claims

1. Cover for electrical installations, **characterized in that** the cover is made of concrete which is provided with a reinforcement while the rock graduation contained in the concrete is smaller than 4 mm and while natural or artificial sand is used and while the electrical installations are switches or socket outlets.

2. Cover as claimed in claim 1, **characterized in that** the concrete used is self-compacting concrete.

3. Cover as claimed in any claim 1 or 2, **characterized in that** fine dust particles or pigments are added to the concrete mix.

4. Cover as claimed in any preceding claim, **characterized in that** the concrete is mixed using the following mass ratios:
• approx. 884 to 894 g of DuraSpezial (DRS)
• approx. 262 to 272 g of H₂O
• approx. 1,089 to 1,099 g of 0/1 sand
• approx. 1 to 3 % of air voids,
while the components add up to 100 %.

5. Cover as claimed in any claim 1 through 3, **characterized in that** the concrete is mixed using the following mass ratios:
• approx. 884 to 894 g of DuraSpezial (DRS)
• approx. 280 to 290 g of H₂O
• approx. 1,012 to 1,022 g of 0/1 sand
• approx. 12.40 to 12.50 g of glass fibres (1 and 2 mm)
• approx. 1 to 3 % of air voids,
while the components add up to 100 %.

6. Cover as claimed in any claim 1 through 3, **characterized in that** the concrete is mixed using the following mass ratios:
• approx. 884 to 894 g of DuraSpezial (DRS)
• approx. 280 to 290 g of H2O
• approx. 1,012 to 1,022 g of 0/1 sand
• approx. 12.40 to 12.50 g of glass fibres (1 and 2 mm)
• Pigments and/or fine grain
• approx. 1 to 3 % of air voids,
while the components add up to 100 %.

7. Cover as claimed in any preceding claim, **characterized in that** the surface layer of the control elements is made of aluminium.

8. Cover as claimed in any claim 1 through 6, **characterized in that** the surface layer of the control elements is made of circuit board coated glass.

9. Cover as claimed in any preceding claim, **characterized in that** the switching modules are controlled by slight momentary pressing, touching or stroking the aluminium layer.

10. Cover as claimed in any preceding claim, **characterized in that** the switching modules are actuated using non-contacting sensors.

11. Cover as claimed in any preceding claim, **characterized in that** the switch comprises several buttons with different functions or a stepped button of one function.

## Revendications

1. Cache pour installations électriques, **caractérisé en ce que** ledit cache est fabriqué en béton pourvu d'une armature, les granulats contenus dans le béton étant de grosseur inférieure à 4 mm, du sable naturel ou artificiel étant utilisé, et les installations électriques étant des commutateurs ou des prises de courant.

2. Cache selon la revendication 1, **caractérisé en ce que** le béton utilisé est un béton autocompactant.

3. Cache selon la revendication 1 ou la revendication 2, **caractérisé en ce que** des particules de poussière fine ou des pigments sont ajoutés au mélange de béton.

4. Cache selon l'une des revendications précédentes, **caractérisé en ce que** le béton est mélangé suivant les rapports massiques suivants :
• de 884 à 894 g env. de DuraSpezial (DRS)
• de 262 à 272 g env. de H₂O
• de 1.089 à 1.099 g env. de sable 0/1
• de 1 à 3 % env. de pores d'air,
les composants se complétant à 100 %.

5. Cache selon l'une des revendications 1 à 3, **caractérisé en ce que** le béton est mélangé suivant les rapports massiques suivants :
• de 884 à 894 g env. de DuraSpezial (DRS)
• de 280 à 290 g env. de H₂O
• de 1.012 à 1.022 g env. de sable 0/1
• de 12,40 à 12,50 g env. de fibres de verre (1 à 2 mm)
• de 1 à 3 % env. de pores d'air,
les composants se complétant à 100 %.

6. Cache selon l'une des revendications 1 à 3, **caractérisé en ce que** le béton est mélangé suivant les rapports massiques suivants :
• de 884 à 894 g env. de DuraSpezial (DRS)
• de 280 à 290 g env. de H₂O
• de 1.012 à 1.022 g env. de sable 0/1
• de 12,40 à 12,50 g env. de fibres de verre (1 à 2 mm)
• pigment et/ou de fines
• de 1 à 3 % env. de pores d'air,
les composants se complétant à 100 %.

7. Cache selon l'une des revendications précédentes, **caractérisé en ce que** la couche de surface des éléments de commande est fabriquée en aluminium.

8. Cache selon l'une des revendications 1 à 6, **caractérisé en ce que** la couche de surface des éléments de commande est fabriquée en verre revêtu de platine conducteur.

9. Cache selon l'une des revendications précédentes, **caractérisé en ce que** les modules de commutation sont commandés par simple tapotement, contact ou frottement sur la couche d'aluminium.

10. Cache selon l'une des revendications précédentes, **caractérisé en ce que** les modules de commutation sont activés par des capteurs sans contact.

11. Cache selon l'une des revendications précédentes, **caractérisé en ce que** le commutateur comporte plusieurs surfaces de commutation avec différentes fonctions ou une surface de commutation étagée avec une seule fonction.
